(19) Europäisches Patentamt
European Patent Office
Office européen des brevets

(11) **EP 4 296 806 A1**

(12) **EUROPEAN PATENT APPLICATION**

(43) Date of publication:
**27.12.2023 Bulletin 2023/52**

(21) Application number: **22180890.0**

(22) Date of filing: **24.06.2022**

(51) International Patent Classification (IPC):
**G05B 19/19** (2006.01)   **B62D 6/00** (2006.01)
**B62D 1/28** (2006.01)   **B62D 5/00** (2006.01)

(52) Cooperative Patent Classification (CPC):
**G05B 19/19; G01L 3/109; G01L 5/0042;**
B62D 5/001; B62D 6/008; B62D 6/10;
G05B 2219/42186; G05B 2219/43166;
G05B 2219/50234

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Arnold NextG GmbH
72539 Pfronstetten (DE)**

(72) Inventor: **HEITMANN, Andreas
65428 Rüsselsheim (DE)**

(74) Representative: **Kohler Schmid Möbus
Patentanwälte
Partnerschaftsgesellschaft mbB
Kaiserstrasse 85
72764 Reutlingen (DE)**

(54) **SYSTEM TO CONTROL AND/OR TO SYNCHRONIZE THE MOTION OF TWO SHAFTS**

(57) System to control an element mounted on a remote shaft (120) by an input device mounted on an input shaft (110) and delivering a feedback force from the controlled element to the input device wherein torques calculated by an ECU (130) and exerted to the input shaft (110) and to the remote shaft (120) are both functions of the difference of the angular positions ($\theta_1, \theta_2$) of the input shaft (110) and of the remote shaft (120) as measured by angle sensors (113, 123) wherein the angular positions ($\theta_1, \theta_2$) are weighted by a virtual spring constant (k) that emulates a mechanical connection between the input shaft (110) and the remote shaft (120).

Fig. 2

EP 4 296 806 A1

**Description**

Human-machine interfaces in vehicles, machines and robotic devices allow an operator to control the position of a remote element like a wheel or tool by applying an input force via an input device and to receive a feedback of the position and torque of the controlled element. However, this often requires a complicated mechanical linkage between the input device and the controlled element, as the connected components are most often not placed in a straight line enabling a connection between them by a simple shaft. Furthermore, such a mechanical connection is prone to wear and requires expensive bearings.

Therefore, electro-mechanical control systems are widely used to overcome these problems.

In printers several gears and belts ensure that a number of rollers are driven by a single motor as if all the rollers where mounted on a common virtual shaft, ensuring the rollers at one end does not pull the paper faster than the preceding roller delivers the paper, whereby the paper could be torn apart. Or the paper could be folded and jammed if a roller that picks up the paper rotates slower than the preceding roller that delivers the paper. To reduce costs and allow different speeds of the paper in different stages of the paper handling, printers are equipped with multiple motors to drive the roller shafts in different areas of the printer. Document CN106208865B *"Load observer-based virtual line shaft control method for multiple permanent magnet synchronous motors"* discloses a method of improving the synchronisation of a number of slave motors with a master motor by means of a load observer and forward feeding of the observed load to the current loop of the slave motors. This allows the slave motors to respond quicker to starts, stops and variations in load and maintain better synchronization with the master motor based on position and speed control.

However, this document does not disclose a solution to the problem how to forward an external input provided by an operator to a controlled element and to receive a feedback from the controlled element with regard to the change of its position and torque.

CN106208865B only describes how a slave end of a shaft can be synchronized in position and torque with the position of the master end of the shaft and which torque has to be applied to obtain the desired position of the slave end. Furthermore, this known method relies on calculation of loads based on angle, speed and current dynamic models and is only applicable if electric AC motors are used.

In mechanical control systems in which an operator provides input and receives feedback from the controlled element by a mechanical connection, the small elastic deformations of the components may be considered during the design of the components to ensure the deformations will be negligible during normal operation and will not affect the system's performance.

In electronic control systems, in which a mechanical connection between an input device and a controlled element is replaced by an electronic control system that forwards input control commands to an actuator changing the position of the controlled element, it is considered advantageous that such deformations are not present as the mechanical component is replaced by an electro-mechanical system simulating the behaviour of an ideal mechanical component having infinite rigidity.

However, control systems operating with measuring the position of a user input device and using this input for determining a target position of the controlled device or element, are faced with the issue of a time delay between applying an input to the input device, forwarding a corresponding target position and achieving the desired target position of the controlled element. This leads to an offset between the position in which the controlled element should be at a given time, corresponding to the position of the input device at that same given time, and the position the controlled element is actually in at that given time, while moving towards the position it should preferably already be in. This is a well-known control problem and a number of solutions have been proposed to reduce the delay and thus the offset.

However, the elimination of any offset between an input device and the position of a controlled element does not represent an actual physical connection between the input device and the controlled element, as all solid materials have an elasticity module and consequently work like a spring, although often with a very high spring constant leaving the effects of the elasticity to be negligible and barely measurable. Hence, a physical load-transmitting component will always introduce a small offset between where the load is applied and where the load is transmitted to. Although the offset is not caused by a time delay, but by elastic deformations of the component caused by the load being transmitted.

The object of the present invention is to provide an electro-mechanical system to control and/or to synchronize a remote element by an input device or vice versa that is a true representation of a purely mechanical control system and that allows a feedback from the controlled element to the input device.

This object is achieved by a system according to claim 1. Subclaims 2 to 10 indicate advantageous further embodiments of the invention. The invention also comprises a method to operate such a system according to claims 11 and 12.

The electronic control unit synchronizes the torque and angles between the input shaft and the remote shaft in a manner that imitates a direct mechanical connection between the input device and the controlled element. A physical shaft for transmission of torque is comparable to a torsion spring with a spring constant k, which is determined by material, shape and dimensions of the shaft. If an external force is applied to one end of the shaft initially an angular offset between the two ends of the shaft will be caused. This behaviour of a virtual shaft directly connecting the input device and the controlled element is emulated by the electronic control unit. The torque actuators on both shafts are activated in such a way that the angular positions of the input shaft and the remote shaft follow each other with a certain offset that is time dependent. Also, the inertia of the shafts and/or the controlled element can be taken into consideration. Further, it is possible to emulate a gearbox and/or a power steering arranged between the input device and the controlled element by introducing corresponding factors by which the angular difference between the two shafts is multiplied.

If the system is completely symmetrical, the functions of the input shaft and the remote shaft can also be interchanged. The remote shaft can control the movement of a device connected to the input shaft.

The invention has various applications like the replacement of a steering column in a vehicle and providing a steer-by-wire system with force feedback, the remote control of machinery with force feedback and the remote control of robots. The system can also be used to replace hydraulic systems or to provide a feedback to an operator in hydraulic systems.

The system can also be used to transmit linear motion when the rotary motion of the remote shaft is converted into linear motion. Also, the input shaft can be operated by a linear input device by converting the linear movement of the input device into rotational movement of the input shaft.

In the following, embodiments of the invention are described in more detail with reference to the drawing, which shows in

Fig. 1    a perspective view of a state of the art embodiment of a control system with a continuous control shaft;

Fig. 2    a perspective view of a first embodiment of a control system according to the invention;

Fig. 3    detailed views of an angle sensor depicted in fig. 2;

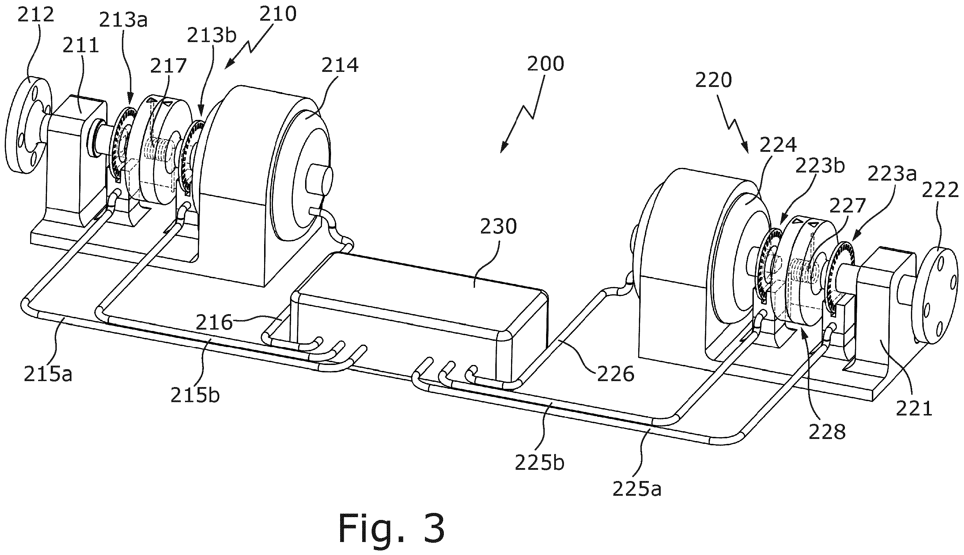

Fig. 3    a perspective view of a second embodiment of a control system according to the invention;

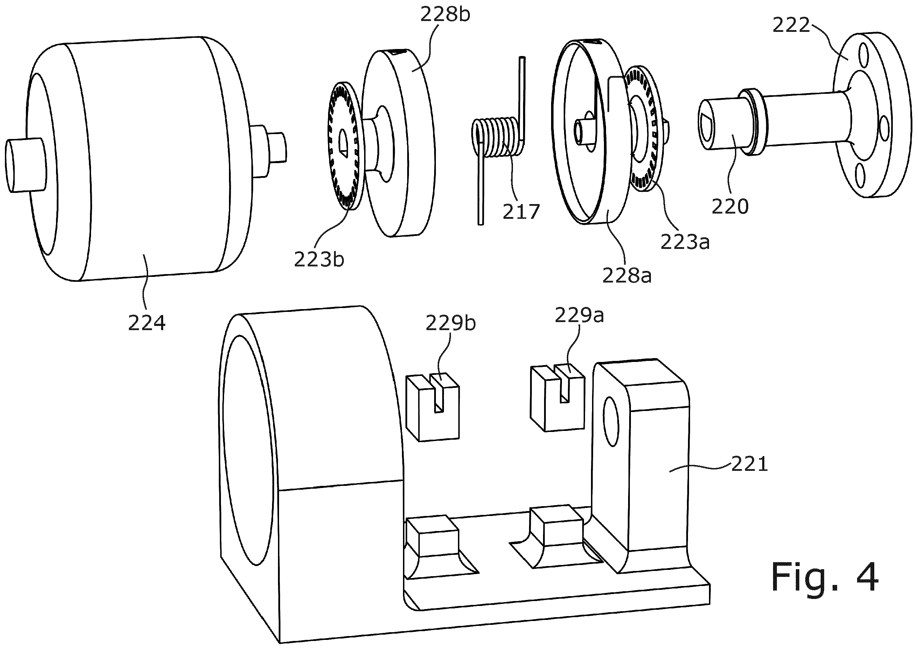

Fig. 4    an exploded view of the remote shaft depicted in fig. 3.

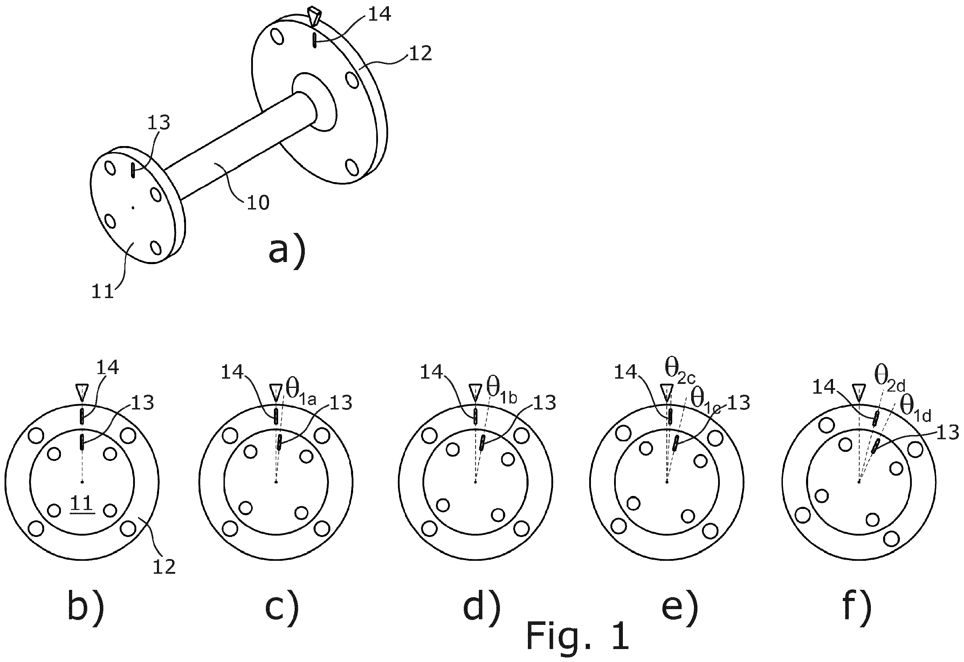

To fully understand the principles and ideas on which the invention is based, the behaviour of a physical shaft for transmitting a torque between two elements is explained with reference to fig. 1 which shows a shaft 10 with a mounting flange 11 at one end for an input device like a steering wheel (not shown) and a mounting flange 12 for an element to be controlled (also not shown) at the opposite end. Flange 11 has a smaller diameter than flange 12 and both flanges 11, 12 have markings 13, 14 to illustrate what happens when a torque is applied to flange 11 by an operator and what is shown in Fig. 1b to 1f.

The physical shaft 10 for transmission of torque is comparable to a torsion spring having a spring constant $k$, that is determined by material, shape and dimensions of the shaft 10. Thus, if a torque is applied to the shaft 10 it will twist the shaft 10 slightly causing one end of the shaft 10 to be rotationally offset by an angle of $\Delta\theta$ relative to the opposite end of the shaft 10, whereby the size of the angle $\Delta\theta$ is determined by the applied torque and the spring constant.

In a static scenario with no torque being transmitted between the flanges 11, 12 as shown in fig. 1b, both ends of the shaft 10 have the same rotational position $\theta_0$ relative to a structure (not shown) on which the shaft 10 is mounted and that defines the rotational axis of the shaft 10. In the illustrated example, the position $\theta_0=0$.

Assuming that the larger flange 12 is connected to a component that requires a torque $T_f$ to overcome friction, a torque $T_{1a}<T_f$ applied to the smaller flange 11 will cause an elastic deformation (torsion) in the shaft 10. The smaller flange 11 rotates to the position $\theta_{1a}$ (fig. 1c). The two flanges 11, 12 now have an angular offset of $\Delta\theta= \theta_{1a}-0= \theta_{1a}$.

Then the torque applied to the smaller flange 11 is increased to $T_{1b}$ being infinitely close to, but below $T_f$ and the smaller flange moves to a position $\theta_{1b}$ as shown in fig. 1d. As the larger flange 12 is hold back by the resistance of the connected component, the angular offset between the two flanges 11, 12 is now $\Delta\theta= \theta_{1b}-0= \theta_{1b}$.

As the torque applied on the smaller flange 11 exceeds $T_F$, the friction of the component is overcome and the second flange 12 starts to move. In fig. 1e the larger flange 12 has just begun to move and reached an angular position of $\theta_{2c}$, whereas the smaller flange 11 has moved the same distance as the second flange 12 and thus the whole shaft 10 started to rotate and the smaller flange 11 is now in position $\theta_{1c}$. As the applied torque remains $T_f$, the angular offset between the two flanges is still $\Delta\theta= \theta_{1b}= \theta_{1c}- \theta_{2c}$.

If a constant torque of Tf continues to be applied to flange 11, the component attached to flange 12 will rotate at a constant speed. When the larger flange 12 has reached a position $\theta_{2d}$, the smaller flange 11 will have reached a position of $\theta_{1d}$, and the angular offset will remain $\Delta\theta= \theta_{1d} - \theta_{2d}= \theta_{1b}$ (fig. 1f).

If the torque applied on the smaller flange 11 is increased, the angular offset will increase and the rotation speed of the shaft 10 and the component attached to flange 12 will increase.

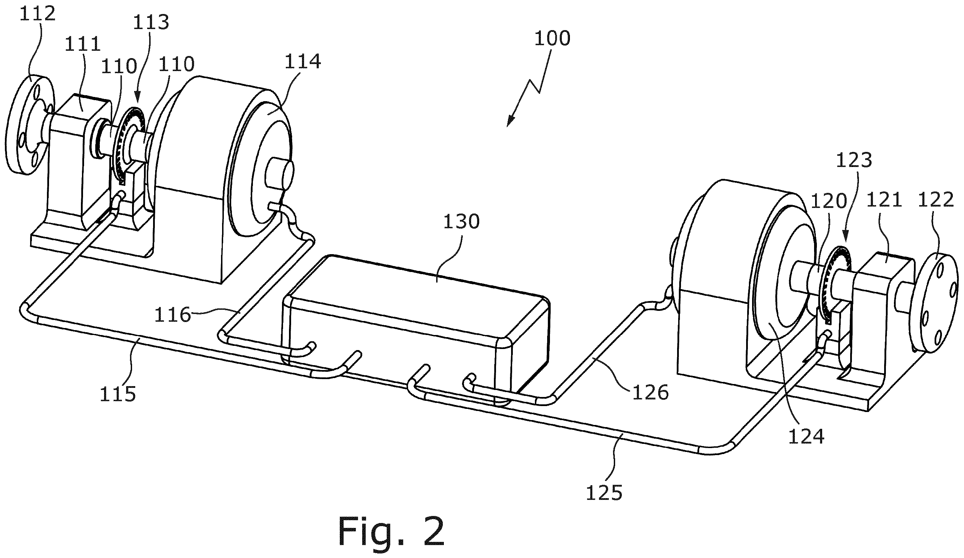

In figure 2 a first embodiment of a complete control system 100 according to the invention comprising an input shaft 110 and a remote shaft 120 is depicted. The input shaft 110 is mounted on a frame member 111 and the remote shaft on a frame member 121. On one end of the input shaft 110 a flange 112 is mounted to which an input device (not shown) like a steering wheel can be attached. Also, one end of the remote shaft 120 is provided with a flange 122 to which an element that shall be controlled by the system 100 (not shown) can be attached.

Further, both shafts 110, 120 are provided with angle sensors 113, 123 and with a torque actuator 114, 124. The angle sensors 113, 123 provide their output signals 115, 125 to an electronic control unit 130 that calculates control signals 116, 126 for the torque actuators 114, 124 to obtain the desired emulation of a mechanic connection between the input device and the controlled element. The position sensors 113 and 123 measure the relative angles of the shafts 110 and 120 with respect to the frames 111 and 121.

The ECU 130 processes the angle data 115, 125 from both shafts 110, 120 and commands the torque actuators 114 and 124 to synchronize torque and angles between shafts 110 and 120 such that the shafts 110, 120 behave like one continuous shaft connecting the two flanges 112, 122.

The control function in the ECU 130 calculates the required torque to be provided by the torque actuators 114 and 124 based on the input from the position sensors 113 and 123, according to the following basic relations:

$$T_{114}=k(\theta_{123}-\theta_{113})$$

and

$$T_{124}=k(\theta_{113}-\theta_{123}),$$

and thus

$$T_{114}=-T_{124}$$

When no external torque is applied to either shaft 110 or 120 the ECU 130 will command torque actuators 114, 124 to provide torques of equal size but opposite directions until $8113=\theta_{123}$.

If an external torque is applied on one shaft, in this example the input shaft 110, shaft 110 will change its angular position and the output signal 115 of position sensor 113 will be different from the output signal 125 position sensor 123. This will cause the ECU 130 to command torque actuator 114 to apply a torque $T_{114}$ on shaft 110 in the opposite direction of the applied torque. At the same time, the ECU 130 will command the torque actuator 124 to apply a torque $T_{124}$ on shaft 120, being equal to the torque applied on shaft 110 by the actuator 114, but of opposite direction and thus in the same direction as the external torque being applied to shaft 110. As the torques are calculated from the spring constant (that remains a fixed constant) and the angular difference, the torques will increase as the angular difference increases.

If the resisting torque $T_{114}$ exceeds the torque applied to shaft 110, the shaft 110 will start to turn back. Thereby the difference between position measurements from position sensors 113 and 123 will be reduced and the ECU 130 will command both torque actuators 114 and 124 to reduce the torques provided, until the torque applied by torque actuator 114 to shaft 110 equals the external torque being exerted on shaft 110.

If the torque $T_{124}$ applied to shaft 120 by torque actuator 124 exceeds the torque that is required to initiate a motion of the component attached to flange 122, shaft 120 will start to rotate and its angular position $\theta_{123}$ will start to change accordingly and the position reading $\theta_{123}$ from position sensor 123 changes. This means that the torque applied to shaft 110 by torque actuator 114 will not be increased further when the torques applied by the torque actuators 114 and 124 exceeds the resistance of shaft 120. The applied external torque will then be allowed to move shaft 110 and maintain the angular offset $\Delta\theta=8113-\theta_{123}$ between the two shafts 110 and 120.

The model of the virtual shaft can be further refined in case of dynamic motion, wherein the inertia of the shafts 110, 120 and of the actuators 114, 124 needs to be considered. A physical shaft could be modelled as a system of two masses, each with inertia J/2, coupled by a spring with constant k.

- $$T_1 = k(\theta_2 - \theta_1) - \frac{J}{2}\ddot{\theta}_1$$

- $$T_2 = k(\theta_1 - \theta_2) - \frac{J}{2}\ddot{\theta}_2$$

The virtual shaft system might have a different inertia J'/2 at each end. To compensate for the change in inertia, an additional term is introduced into the control equation:

- $$T_1 = k(\theta_2 - \theta_1) - \frac{J - J'}{2}\ddot{\theta}_1$$

- $$T_2 = k(\theta_1 - \theta_2) - \frac{J - J'}{2}\ddot{\theta}_2$$

Furthermore, a motion filter can be applied to remove unwanted frequencies, e.g.

- $$T_1(s) = H(s)k(\theta_2 - g\theta_1)$$

When a human operator is operating machinery or controlling the steering wheel of a vehicle through a shaft, it is usually necessary to install a gearbox to reduce the required torque to a comfortable level. When introducing a gear ratio to reduce torque on one side of the gearbox, it is followed by an increase of motion, as the work input equals the work output of an (ideal) gearbox.

Using a control system according to the invention allows to integrate a virtual gearbox as well. A simulation of a gearbox with ratio g may be obtained simply by multiplying one of the angular positions with the gear ratio as shown below:

- $$T_1 = k(\theta_2 - g\theta_1)$$

- $$T_2 = k(g\theta_1 - \theta_2)$$

However, it may not always be desirable to use a gear ratio to reduce the required torque input from a human operator. In steering gear systems for cars, servo-assisted steering has been added in most vehicles instead of increasing the gear ratio, which would reduce the torque needed from the driver but increase the number of revolutions of the steering wheel necessary for parking manoeuvres. A virtual servo-assisted steering may also be included into the control system according to the invention. The torque of one of the shafts can be multiplied by an assistance factor as shown below:

- $$T_1 = k(\theta_2 - \theta_1)$$

- $$T_2 = ak(\theta_1 - \theta_2)$$

As the virtual gearbox and virtual servo-assisted steering are virtual and not actual physical structures, both the virtual gearbox and virtual servo-assisted steering can be made variable, depending on different input parameters. If the system is a steer-by-wire system replacing the steering column of a car, this could be used to introduce speed-depending servo-assisted steering and a speed depending steering gear ratio, by making the above described factors variables depending of the vehicles speed, such that:

- $$\boldsymbol{g = g(v)}$$

- $$\boldsymbol{a = a(v)}$$

These factors could also be chosen according to preferences of a driver or dependent on mode settings of the vehicle, such as Sport, Comfort or other selectable characteristics. These factors can also be combined with adjustable damper settings and other variables.

Therefore, the most comprehensive equations to calculate the time and speed dependent torques $T_1, T_2$ are the following:

$$T_1(t) = F_1\{a_1 \cdot k \cdot (g_2\theta_2(t) + s_2\dot{\theta}_2(t) - g_1\theta_1(t) - s_1\dot{\theta}_1(t))\}$$

$$T_2(t) = F_2\{a_2 \cdot k \cdot (g_1\theta_1(t) + s_1\dot{\theta}_1(t) - g_2\theta_2(t) - s_2\dot{\theta}_2(t))\},$$

wherein $F_1, F_2$ are time domain filter functions,

> $a_1, a_2$ are torque amplification factors,
> $g_1, g_2$ are virtual gear ratios,
> $s_1, s_2$ are speed amplification factors,
> $k$ is a virtual spring constant,
> $\theta_1(t), \theta_2(t)$ are the angular positions of the input shaft and of the remote shaft,
> $\dot{\theta}_1(t), \dot{\theta}_2(t)$ are first derivatives of the angular positions $\theta_1(t), \theta_2(t)$.

If the system is a steer-by-wire-system for a vehicle the factors $a_1, a_2, g_1, g_2, s_1, s_2$ and $k$ can be dependent on the speed $v$ of the vehicle.

As a torque-control of both hydraulic motors and electrical DC motors is often difficult and involves complicated motor controllers and control algorithms, a second embodiment of the invention is depicted in fig. 3 that avoids some of these problems. A torque control of hydraulic motors is in general easy by varying the hydraulic pressure. However, the variation of the hydraulic pressure and flow in a fast way is complicated to realise in practical applications. Likewise, electric DC-motors are in principle easy to control with regard to torque by varying the current through the motor. However, when the motor runs very slowly or has to provide a static torque, controlling the torque accurately becomes complicated. On the other hand the position control of both hydraulic and electrical DC-motors is much easier and control systems and motor controller systems for position control have been developed for decades and are easily commercially available.

Thus, in the second embodiment of the system 200 according to fig. 3, each shaft 210, 220 is provided with a flexible element 217, 227 and an additional angle sensor 218, 228 between the torque actuator 214, 224 and the additional angle sensor 218, 228, as shown in figure 3. Fig. 4 shows the remote shaft 220 in an exploded view that discloses the flexible element 227 as well as the two angle sensors 223 and 228 in more detail.

The second embodiment of a complete system 200 consisting of an input shaft 210 and a remote shaft 220 that are connected to a common ECU 230 containing means of data processing to provide position command signals 216, 226 to the two torque actuators 214, 224, based on position measurement inputs 225a-225b from the four position sensors 213a, 223a, 213b, 223b.

The position sensors 213a and 223a measure the relative angles of the shafts 212 and 222 with respect to the frames 211 and 221 and the position sensors 213b and 223b measures the relative angles of the torque actuators 214 and 224 with respect to the frames 211 and 221.

The ECU 230 processes the angle data from all four position sensors 213a, 223a, 213b and 223b and commands the torque actuators 214 and 224.

The control function in the ECU 230 synchronizes torque and angles between shafts 212 and 222; such that the behaviour mimics a rotational shaft, connecting shafts 212 and 222. It should be understood that this virtual shaft is not a physical component.

Where the ECU 130 in the first embodiment shown in fig. 2 controlled the torque actuators 114, 124 to provide a given torque of equal size but in opposite directions, the ECU 230 shown in fig. 3 controls the torque actuators 214, 224 to provide a given position from position sensors 213b and 223b.

The control function in the ECU 230 calculates the required torque to be provided by the flexible elements 217 and 227 by the input from the position sensors 213a and 223a, based on the following basic relations:

$$T_{217} = k(\theta_{223a} - \theta_{213a})$$

and

$$T_{227} = k(\theta_{213a} - \theta_{223a}),$$

and thus

$$T_{217} = -T_{227}$$

If flexible element 217 has the spring constant $k_{217}$ and the flexible element 227 has the spring constant $k_{227}$, the torques are also given as:

$$T_{217} = k_{217} \left( \theta_{213b} - \theta_{213a} \right)$$

and

$$T_{227} = k_{227} \left( \theta_{223b} - \theta_{223a} \right)$$

Thus, the target positions $\theta_{213b}$ and $\theta_{223b}$ to which torque actuators 214 and 224 are to be driven, is given by:

$$\theta_{213b} = \frac{k}{k_{217}} (\theta_{223a} - \theta_{213a}) + \theta_{213a}$$

$$\theta_{223b} = \frac{k}{k_{227}} (\theta_{213a} - \theta_{223a}) + \theta_{223a}$$

When no external torque is applied to either shaft 212, 222, the ECU 230 will command torque actuators 214, 224 to drive towards each other, until $\theta_{213a} = \theta_{213b} = \theta_{223a} = \theta_{223b}$.

If an external torque is applied on one shaft, in this example on the input shaft 212, shaft 212 will change its angular position and the measurement from position sensor 213a will be different from the reading from position sensors 223a and 213b. This will cause the ECU 230 to command torque actuator 224 to drive towards a target position of $\theta_{213a} = \theta_{223a}$. Any resistance on shaft 222 will result in deformation of flexible element 227, causing sensor output 225b from position sensor 223b to deviate from sensor output 225a from sensor 223a. The ECU 230 will then command the torque actuator 224 to drive to the element 621 to the target position 8223b, measured by position sensor 223b, and the torque actuator 214 to drive the element a casing 218 of the flexible element 217 to a target position of $\theta_{213b}$, measured by the position sensor 213b. This will introduce a deformation of the flexible element 217 and introduce a resisting torque on shaft 212 opposing the applied external torque applied on shaft 212. The torque actuator 224 being driven to a position of $\theta_{223b}$ will introduce a torque on shaft 222 through the flexible element 227.

If external torque applied on shaft 212 is increased, the flexible element 217 is further deformed and the control input 215a from sensor 213a changes. This will change target positions $\theta_{213b}$ and $\theta_{223b}$ and the resisting torque on shaft 212 is increased, as well as the torque applied through flexible element 227 is increased. If the resisting torque on shaft 212 exceeds the external torque applied on shaft 212, shaft 212 will start turning back and the target positions $\theta_{213b}$ and $\theta_{223b}$ will change and the applied torque on shafts 222 and the resisting torque on shaft 212 will be reduced, until the torque applied by torque actuator 214 on shaft 212 through the flexible element 217 equals the external torque being applied on shaft 212.

If the torque applied on shaft 222 by the flexible element 227 when torque actuator 224 is driven to the target position $\theta_{223b}$ exceeds what is required to initiate motion of the component to which shaft 220 is attached to, shaft 220 will start to move and the position $\theta_{223a}$ starts changing accordingly.

When shaft 220 starts to rotate as the torque applied by torque actuator 224 through flexible element 227 exceeds what is required to overcome the resistance from the component attached to shaft 220, the position reading $\theta_{223a}$ from position sensor 223a changes. This means that the position $\theta_{223a}$ of shaft 212 must also change and as the difference between $\theta_{223a}$ and $\theta_{223b}$ starts to decrease, so will the ECU 230 command torque actuator 214 to drive to a new target position $\theta_{213b}$, decreasing the deformation of flexible element 217. Thereby, the resisting torque on shaft 210 is reduced and the external torque will then be allowed to move shaft 210 and maintain the angular offset $\Delta\theta = \theta_{213a} - \theta_{223a}$ between the two shafts 210 and 220.

Fig. 4 illustrates the structure of the remote shaft 220 in more detail.

The flexible element 227 is fitted between two casing elements 228a, 228b, such that one end of the flexible element 227 is rotationally fixed to one housing element 228a and the opposing end of the flexible element 227 is rotationally fixed to the other housing element 228b. The housing elements 228a and 228b are locked to each other in axial direction but able to rotate relative to each other. One of the housing elements 228b is rotationally fixed to the rotor of torque actuator 224. The other casing element 228a is rotationally fixed to shaft 220.

An angle sensor 223b, 229b measures the position of the rotor of the torque actuator 224. In this embodiment the angle sensor consists of a position sensor 229b measuring the position of a coded disc 223b being an integrated part of the casing element 228b.

A second angle sensor 223a, 229a measures the position of the shaft 220. In this embodiment the angle sensor consists of a position sensor 229a measuring the position of a coded disc 223a being a part of the casing element 228a.

The components of the shaft end unit are fitted in a framing member 221 which may be an assembly consisting multiple elements, likely including bearings for the rotating parts.

The torque actuator 224 may be an electric or a hydraulic motor or actuator. In this embodiment, the position of the rotor must be controllable by command inputs from controller 230 (fig. 3).

The embodiments described in figures 2 and 3 are exemplary for illustrating and explaining the working principles and ideas of the invention and the claimed invention is not limited to the illustrated embodiments and applications. The invention may also be used for implementation of a remote angle-to-speed control, in which the user controls the torque applied on a torque actuator operating on a rotating component (e.g. a drill) and receives a feedback of the obtained speed of the rotating component in form of the angle/position of the user input device.

## Claims

1. System to control an element mounted on a remote shaft (120, 220) by an input device mounted on an input shaft (110, 210) and delivering a feedback force from the controlled element to the input device wherein the remote shaft (120, 220) and the input shaft (110, 210) are spatially separated and each shaft (110, 120; 210,220) is rotatably mounted in a respective frame member (111, 121; 211, 221) against a spring force **characterized in that** each shaft (110, 120; 210,220) is provided with an angle sensor (113, 123; 213, 223) measuring the rotational position of the shaft (110, 120; 210,220) with respect to its frame member (111, 121; 211, 221) wherein the output signals (115, 125; 215a, 225a) of the angle sensors (113, 123; 213, 223) are transmitted to an electronic control unit (130, 230) that controls a first torque actuator (114, 214) mounted on the input shaft (110, 210) and a second torque actuator (124, 224) mounted on the remote shaft (120, 220) in such a manner that the torques exerted to the input shaft (110, 210) and to remote shaft (120, 220) are both functions of the difference of the angular positions ($\theta_1, \theta_2$) of the input shaft (110, 210) and of the remote shaft (120, 220) as measured by the angle sensors (113, 123; 213, 223) wherein the angular positions ($\theta_1, \theta_2$) are weighted by a virtual spring constant (k) that emulates a mechanical connection between the input shaft (110, 210) and the remote shaft (120, 220).

2. System according to claim 1, **characterized in that** the angular positions ($\theta_1, \theta_2$) of the shafts (110, 120; 210,220) are weighted by additional factors that can be different for the calculation of the torques ($T_1, T_2$) to be applied by the torque actuator (114, 214) to the input shaft (110, 210) and by the torque actuator (124, 224) to the remote shaft (120, 220).

3. System according to claim 1 or 2, **characterized in that** the torques ($T_1, T_2$) applied to the input shaft (110, 210) and to the remote shaft (120, 220) are also functions of known characteristics of the torque actuators (114, 124, 214, 224).

4. System according to one of the preceding claims, **characterized in that** the virtual spring constant (k) is a variable spring constant.

5. System according to one of the preceding claims, **characterized in that** the input shaft (110, 210) and/or the remote shaft (120, 220) are axially divided into two parts that are connected by a flexible element (217, 227) wherein on each part of the shafts (110, 210; 120, 220) an angle sensor (213a, 213b; 223a, 223b) is mounted wherein the first angel sensor (213a) on the input shaft (210) measures the angular position of the input device and the second angle sensor the angular position of the part of the input shaft (210) connected with the torque actuator (214) and the first angle sensor (223a) of the remote shaft (220) measures the angular position of the controlled element and the second angle sensor(223b) the angular position of the part of the remote shaft (220) that is connected to the torque actuator (224).

6. System according to claim 5, **characterized in that** the torques ($T_1, T_2$) exerted to the input shaft (210) and to the output shaft (220) are functions of the differences between the angular positions of the input device and the controlled element as well as of the angular differences between the angular positions of the input device and the torque actuator (214) of the input shaft (210) and the angular positions of the controlled element and the angular position of the torque actuator (224) on the remote shaft (220).

7. System according to one of the preceding claims, **characterized in that** the frame members (111, 121, 211, 221) of the input shaft (110, 210) and of the remote shaft (210, 220) are connected to each other or parts of the same frame.

8. System according to one of the preceding claims, **characterized in that** the electronic control unit (130, 230) multiplies at least one of the output signals (115, 125, 215a, 215b, 225a, 225b) of the angle sensors (113, 123, 213a, 213b, 223a, 223b) by a gear ratio factor (g).

9. System according to claim 8, **characterized in that** the gear ratio factor (g) is a variable factor.

10. System according to one of the preceding claims, **characterized in that** the torque actuators (114, 124, 214, 224) are electrical motors or hydraulic motors.

11. Method to operate a system according to any of the claims 1 to 10, **characterized in that** the time dependent torque signals ($T_1(t)$, $T_2(t)$) controlling the two torque actuators (114, 124, 214, 224) are calculated according to the following equations:

$$T_1(t) = F_1\{a_1 \cdot k \cdot (g_2\theta_2(t) + s_2\dot{\theta}_2(t) - g_1\theta_1(t) - s_1\dot{\theta}_1(t))\}$$

$$T_2(t) = F_2\{a_2 \cdot k \cdot (g_1\theta_1(t) + s_1\dot{\theta}_1(t) - g_2\theta_2(t) - s_2\dot{\theta}_2(t))\},$$

wherein $F_1$, $F_2$ are time domain filter functions,

$a_1$, $a_2$ are torque amplification factors,
$g_1$, $g_2$ are virtual gear ratios,
$s_1$, $s_2$ are speed amplification factors,
$k$ is a virtual spring constant,
$\theta_1(t)$, $\theta_2(t)$ are the angular positions of the input shaft and of the remote shaft,
$\dot{\theta}_1(t)$, $\dot{\theta}_2(t)$ are first derivatives of the angular positions $\theta_1(t)$, $\theta_2(t)$.

12. Method according to claim 11 **characterized in that** the factors are dependent on the speed ($v$) of a vehicle if the system is a steer-by-wire system for vehicles.

13. Method according to claim 10 or 11, **characterized in that** the following parameters are chosen to equal 1: $a_1$, $a_2$, $g_1$, $g_2$, $s_1$, $s_2$ and $F_1$, $F_2$.

a)

b)    c)    d)    e)    f)

Fig. 1

Fig. 2

EP 4 296 806 A1

Fig. 3

Fig. 4

228b

222

223b

217

223a

220

224

228a

229b

229a

221

EP 4 296 806 A1

Europäisches
Patentamt

European
Patent Office

Office européen
des brevets

# EUROPEAN SEARCH REPORT

Application Number

EP 22 18 0890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/194464 A1 (DÄHLER MARCO [CH]) 23 June 2022 (2022-06-23) * the whole document * ----- | 1-13 | INV. G05B19/19 B62D6/00 B62D1/28 B62D5/00 |
| X | US 2021/171094 A1 (FARSHIZADEH EMAD [DE] ET AL) 10 June 2021 (2021-06-10) * paragraph [0062] – paragraph [0108]; figures 2, 3a, 3b, 4, 5 * ----- | 1-13 | |
| X | EP 3 575 187 A1 (JTEKT CORP [JP]) 4 December 2019 (2019-12-04) * paragraphs [0009], [0042] – [0071]; figure 1 * ----- | 1-13 | |

TECHNICAL FIELDS
SEARCHED     (IPC)

G05B
B62D

The present search report has been drawn up for all claims

| Place of search | Date of completion of the search | Examiner |
|---|---|---|
| The Hague | 9 December 2022 | Itoafa, Alex |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 0890

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2022

| Patent document cited in search report | | Publication date | Patent family member(s) | | Publication date |
|---|---|---|---|---|---|
| US 2022194464 | A1 | 23-06-2022 | CN | 113661113 A | 16-11-2021 |
| | | | DE | 102019204857 A1 | 08-10-2020 |
| | | | EP | 3947109 A1 | 09-02-2022 |
| | | | US | 2022194464 A1 | 23-06-2022 |
| | | | WO | 2020201059 A1 | 08-10-2020 |
| US 2021171094 | A1 | 10-06-2021 | CN | 112896296 A | 04-06-2021 |
| | | | DE | 102019133025 A1 | 10-06-2021 |
| | | | US | 2021171094 A1 | 10-06-2021 |
| EP 3575187 | A1 | 04-12-2019 | CN | 110539792 A | 06-12-2019 |
| | | | EP | 3575187 A1 | 04-12-2019 |
| | | | US | 2019367083 A1 | 05-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106208865 B